Europäisches Patentamt

European Patent Office

Office européen des brevets

(11) Veröffentlichungsnummer: **0 382 843**
**A1**

(12) **EUROPÄISCHE PATENTANMELDUNG**
veröffentlicht nach Art. 158 Abs. 3
EPÜ

(21) Anmeldenummer: 88904288.3

(22) Anmeldetag: 05.02.88

(86) Internationale Anmeldenummer:
PCT/SU88/00028

(87) Internationale Veröffentlichungsnummer:
WO 89/06899 (10.08.89 89/18)

(51) Int. Cl.5: **A01F 7/06, A01F 12/26**

(43) Veröffentlichungstag der Anmeldung:
**22.08.90 Patentblatt 90/34**

(84) Benannte Vertragsstaaten:
**DE FR GB IT SE**

(71) Anmelder: **GOLOVNOE**
**SPETSIALIZIROVANNOE**
**KONSTRUKTORSKOE BJURO PO**
**KOMPLEXAM MASHIN DLYA**
**DVUKHFAAAAZNOI UBORKI ZERNOVYKH,**
**RISA, SEMENNIKOV TRAV I DRUGIKH**
**KULTUR I STATSIONARNOGO OBMOLOTA**
**Ul. Instrumentalnaya 2 Taganrog, 347928(SU)**

(72) Erfinder: **YARMASHEV, Jury Nikolaevich**
**1 Krepostnoi per., 34-213**
**Taganrog, 347922(SU)**
Erfinder: **ZAPANDI, Vladimir Arturovich**
**ul. Svobody, 24/2-37**
**Taganrog, 347902(SU)**
Erfinder: **TKACHEV, Valentin Nikitovich**
**ul. Transportnaya, 1/2-152**

**Taganrog, 347927(SU)**
Erfinder: **PEDER, Olev Iosifovich**
**ul. Furmanova, 3**
**Taganrog, 347914(SU)**
Erfinder: **ANASHKIN, Alexandr Trofimovich**
**ul. Trudovykh rezervov, 2/1-25**
**Taganrog, 347902(SU)**
Erfinder: **KORENKOV, Ivan Vasilievich**
**Krepost 3 gruppa, 24**
**Taganrog, 347922(SU)**
Erfinder: **KLENIN, Nikolai Ivanovich**
**ul. Bolshaya Akademicheskaya, 77/1-70**
**Moscow, 125183(SU)**
Erfinder: **LOMAKIN, Sergei Gerasimovich**
**ul. Lesnaya, 25-38 Moskovskaya obl.**
**pos. Pravdinsky, 141290(SU)**

(74) Vertreter: **Füchsle, Klaus, Dipl.-Ing. et al**
**Hoffmann . Eitle & Partner Patentanwälte**
**Arabellastrasse 4**
**D-8000 München 81(DE)**

(54) **DRESCH- UND TRENNVORRICHTUNG IN AXIALFLUSSBAUART FÜR MÄHDRESCHER.**

(57) Das Wesen der Erfindung besteht darin, daß Zähne (6) am Rotor (1) entlan Schraubenlinien gelegen sind, deren Richtung mit der Richtung spiralförmiger Leitrippen (3) an einem Gehäuse (2) nicht übereinstimmt, während an einem Abscheidegitter (5) Zähne (8) auf einer Länge angebracht sind, die der Anordnung der Zähne (6) am Rotor (1) entspricht.

FIG 1

# DRESCH- UND ABSCHEIDEVORRICHTUNG MIT AXIALEM ROTOR FUR GETREIDEMAHDRESCHER

## Technisches Gebiet

Die Erfindung bezieht sich auf den Landmaschinenbau, insbesondere auf Rotordresch- und Abscheidevorrichtungen, die in den Axial-Mahdreschern zur Anwendung gelangen.

Am effektivsten kann die vorliegende Erfindung bei der Ernte von langstengeligen, angefeuchteten und mit grünem Nebenhalm verunkrauten Ährengräsern, beispielsweise Weizen, Roggen und anderen Kulturen, insbesondere Reis, angewendet werden.

## Zugrundeliegender Stand der Technik

In der bekannten Dreschvorrichtung von Axial-Mähdreschern führt ein in der Längsrichtung angeordneter Rotor gleichzeitig den Drusch des ankommenden Gutes und das Verschieben desselben entlang einer Spiralbahn axial zum Mähdrescheraustritt hindurch. Der Drusch findet dank der Ein-wirkung der zusammenwirkenden Elemente von Rotor und Gehäuse auf das Druschgut statt. Dadurch, daß in den Dreschvor-richtungen der Axial-Mähdrescher originelle Einrichtungen in Form von stiftförmigen Elementen zur Anwendung kommen, können die Einsatzmöglichkeiten derartiger Mähdrescher für die Ernte einer breiteren Zahl von Kulturarten unter verschiedenen Bedingungen erweitert werden. Dies ist erforderlich, wenn man den Stroh beim Abernten von durchfeuchteten Kultu-ren bzw. unter nassen Witterungsverhältnissen auskämmen muß. Besonders augenscheinlich tritt dies bei Reisernten zutage, weil die Verminderung der Kornabschälung und -brechung das handelsübliche Aussehen und die Saateigenschaften des Korns verbessert und die Lagerungsfristen des Mahlgetreides verlängert.

Dabei stellte man aber neben den erwähnten Vorteilen fest, daß ein charakteristischer Nachteil der Dreschvorrichtungen von Axial-Mähdreschern ein unstabiler Ablauf des technologischen Prozesses sowie eine geringe Arbeitsleistung sind, die durch unstabile Charakteristiken der Einwirkung der Abscheider auf das Gut beim Bearbeiten eines lang- und steifstengeligen Reisstrohes, insbesondere in der Dreschzone, begrenzt ist. Dieser Nachteil ist dadurch bedingt, daß eine Verstopfung des Gehäuses mit der anfallenden Stengelmasse, meist am Eintritt in die Dreschzone, sowie eine Verstopfung des Rotors selber infolge des Aufwickelns langer Strohstengel auf denselben und Ausbildens von Strohsträngen, erfolgt. Dabei nimmt der Leistungsaufwand stark zu, die Effektivität der Einwirkung auf das Druschgut wird verringert, die Körperverluste hinter dem Mähdrescher werden erhöht. Dies hängt entweder mit der Konstruktion des Mähdrescherrotors, der in Gestalt einer Welle und sich von dieser nach außen erstreckenden Strahlen ausgeführt ist, oder aber mit der Ausrustung eines zylindrischen Rotors mit einer Reihe schaufelförmiger Elemente zusammen, deren Konstruktion einen unsicheren Ablauf des technologischen Prozesses, eventuelle Ausbildung von Strohsträngen, eine Zunahme der Körnerverluste hinter dem Mähdrescher und eine Abnahme der Gesamtleistung bedingt.

Bekannt ist ein Abscheider von Axial-Mähdreschern (US, A, 4362160), in dem der Rotor und das Gehäuse mit einer Anzahl von Elementen ausgestattet sind, die auf die Kornmasse einwirken und ein annehmbares Niveau des spezifischen Durchsatzvermögens des Abscheiders aufrechterhalten können. Diese Einrichtung unterscheidet sich von den bekannten dadurch, daß die Elemente am Rotor und am Gehäuse in einer Reihe entlang einer "Rückspirale" liegen, die mit der Richtung der schraubenförmigen Bewegung des Druschgutes übereinstimmt.

Ein Nachteil der beschriebenen Dreschvorrichtung besteht in einer geringen Transportfähigkeit des Abscheiders, was einen unstabilen Ablauf des technologischen Prozesses, einen erheblichen Leistungsaufwand und eine Senkung der Arbeitsleistung des Mähdreschers zur Folge hat. Das Anbringen der Elemente am Rotor und am Gehäuse entlang einer "Rückspirale" erlaubt es nicht, das zu bearbeitende Gut zurück zum Mähdrescheraustritt hin effektiv zu verschieben, und es ist demnach zu bezweifeln, daß das Erfindungsziel mittels einer solchen konstruktiven Ausführung erreicht werden kann.

- 3 -

Die am Rotor und am Gehäuse vorhandenen, entlang Schraubenlinien angebrachten schaufelförmigen Elemente, deren Richtung mit der Anordnungsrichtung der Leitrippen am Gehäuse übereinstimmt, ermöglichenes, das Körnergut dank der Zusammenwirkung mit den Leitrippen des Gehäuses in der axialen Richtung zu leiten.

Eine der Vorbedingungen zur Erhöhung der Zuverlässigkeit des Ablaufs des technologischen Prozesses in den Axial-Mähdreschern besteht in der Aufrechterhaltung eines annehmbaren Niveaus des spezifischen Durchsatzvermögens durch den Rotor.

Um den nach rückwärtsgerichteten Gutstrom zu vergrößern und ein optimales Volumen der auszudreschenden und abzuscheidenden Masse einzustellen, rüstet man das Rotorgehäuse mit einer Reihe von besonders ausgebildeten Schlagleisten aus, wobei am rationellsten die Anordnung der Schlagleisten am Rotor entlang Schraubenlinien ist, die senkrecht zur Schraubenlinie der am Gehäuse angebrachten Leitrippen verlaufen. Die Zusammenwirkung dieser Schlagleisten mit den Gehäuseleitrippen intensiviert die Verschiebung des Gutes nach rückwärts nebst dem Wenden desselben und verstärkt dadurch den Dresch- und Abscheideprozeß.

Es ist ein weiterer Axial-Mähdrescher bekannt (US, A, 3962549), in dem die Dreschvorrichtung einen Rotor enthält, der mit einer Reihe von schraubenförmigen Vollkörperschlagleisten in der Dreschzone enthält. Die Schlagleisten sind am Rotor entlang Schraubenlinien angebracht, die mit der Richtung der Schraubenlinien der am Gehäuse angebrachten Leitrippen nicht übereinstimmen.

Allerdings üben die an der Oberfläche des Rotors auf seinem Umfang angebrachten spiralförmigen Vollkörperschlagleisten beim Abernten von langstengeligen angefeuchteten Kulturen, insbesondere von Reis, keine effektive Einwirkung auf den Drusch aus, was zu erhöhten Körnerverlusten hinter dem Mähdrescher führt, während die Neigung zur Strangbildung den Rotor viel weniger beständig gegen ungleichmäßige Zufuhr des Gutes vom Schneidwerk oder Aufnehmer macht und zum übermäßigen Leistungsverbrauch und Reduzieren der Ge-

- 4 -

samtleistung führt.

Bekannt ist ferner ein weiterer Axial-Mähdrescher mit einem Universalrotor und einem Dreschkorb für den Einsatz zum Abernten unterschiedlicher Kulturen unter verschiedenen Bedingungen (US, A, 3618616), in dem Rotor, Gehäuse und Dreschkorb mit einer Anzahl von Zähnen ausgestattet sind, die auf das Gut bei dessen Bearbeitung einwirken.

Die Zähne sind am Rotor entlang seiner peripheren Außenfläche angebracht. Ebensolche Zähne sind an der in Umlaufrichtung des Rotors vorderen und hinteren Dreschkorbkante sowie an den an die erwähnten Dreschkorbkanten angrenzenden Seitengitter des Gehäuses angebracht. Beim Rotorlauf treten seine Zähne mit den gleichen Zähnen am Dreschkorb und an den Seitengittern in Eingriff, wodurch das Auskämmen der Ähren aus dem Stroh im Augenblick des Hindurchziehens des Gutes im Seitenspalt zwischen den Zähnen nebst dem Wenden derselben vorgenommen wird, was den Drusch- und Abscheideprozeß intensiviert.

Ein Nachteil des bekannten Mähdreschers besteht in einer hohen Energieintensität des technologischen Prozesses sowie in der Neigung zur Rotorverstopfung. Dies hängt mit der Rotorkonstruktion und mit der gegenseitigen Anordnung auf seiner Oberfläche sowie auf den Oberflächen des feststehenden Gehäuses und des Dreschkorbes zweckdienlicher Arbeitselemente zusammen, die bei der Bearbeitung des Gutes miteinander vielfach kontaktieren.

Eine geringe Transportfähigkeit des Rotors und seine Konstruktion in Gestalt einer Welle und sich von dieser nach außen axial erstreckenden Strahlen führt zur Verstopfung des Rotors infolge des Ausfüllens der zwischen den Rotorstrahlen liegenden Zwischenräume mit dem Druschgut.

Bei dem Umlauf des Rotors findet beim Hindurchziehen des Gutes durch den Seitenspalt zwischen den Zähnen, die auf den Rotorstrahlen sowie an den Flanken von Gehäuse und Dreschkorb axial angebracht sind, bei deren gleichzeitigem Kontaktieren mit dem Gut ein übermäßiger Leistungsverbrauch statt. Dies bewirkt einen Abfall der Rotordrehzahl, eine Störung des technologischen Prozesses, eine Zunahme der Körnerverluste

- 5 -

sowie eine Abnahme der Arbeitsleistung des Mähdreschers.

Also besitzen die beschriebenen bekannten Konstruktionen der Dreschvorrichtungen eine niedrige Charakteristik der Einwirkung auf das Gut beim Bearbeiten eines lang- und steifstengeligen Reisstrohes. Der normale technologische Dresch- und Abscheideprozeß wird gestört, was zum Ausbilden von Strohsträngen, zu unbegründeten Körnerverlusten hinter dem Mähdrescher und zur Senkung der Gesamtleistung des Mähdreschers führt.

Offenbarung der Erfindung

Das Ziel der Erfindung ist die Beseitigung der vorerwähnten Nachteile der bekannten Vorrichtungen.

Der vorliegenden Erfindung liegt die Aufgabe zugrunde, eine solche Dresch- und Abscheidevorrichtung mit axialem Rotor zu schaffen, deren Konstruktion es erlauben würde, dank Verminderung der Strangbildungsmöglichkeit und Herabsetzung der Energieintensität die Zuverlässigkeit des Ablaufs des technologischen Prozesses zu erhöhen sowie die Körnerverluste hinter dem Mähdrescher zu verringern und die Gesamtleistung desselben zu erhöhen.

Die gestellte Aufgabe wird dadurch gelöst, daß in einer Dresch- und Abscheidevorrichtung mit axialem Rotor für Getreidemähdrescher, die einen Rotor mit Zähnen in der Dresch- und Abscheidezonen enthält, welcher entlang der Fahrtrichtung des Mähdreschers in einem zylindrischen Gehäuse mit Zähnen angeordnet ist, dessen oberer Teil mit spiralförmigen Leitrippen an seiner Innenfläche, dessen unterer Teil aber in der Dreschzone mit einem Dreschkorb und in der Abscheidezone mit einem Abscheidegitter ausgestattet ist, erfindungsgemäß die Zähne am Rotor entlang Schraubenlinien angebracht sind, deren Richtung mit der Richtung der spiralförmigen Leitrippen am Gehäuse nicht übereinstimmt, während am Abscheidegitter Zähne auf einer Länge angebracht sind, der der Anordnung ähnlicher Zähne am Rotor entspricht.

Die erfindungsgemäße Konstruktion des Dreschvorrichtungsrotors mit der Anordnung einer Vielzahl von Greifzähnen entlang einer Schraubenlinie, die mit der Richtung der spi-

- 6 -

ralförmigen Leitrippen am Gehäuse nicht übereinstimmt, wobei jeder von diesen Zähnen eine relativ geringe Oberfläche zum Ergreifen des Gutes besitzt und solcherweise angebracht ist, daß die Zähnereihen keinerlei Konfiguration bilden, die zum Ausbilden von Strohsträngen beitragen würde, zugleich aber ein bevorzugter effektiver Abstand zwischen den Zähnen beibehalten wird, stabilisiert den Druschvorgang. Jeder Zahn am Rotor erfaßt seinen Teil des Gutes nicht mit den Nachbarzähnen gemeinsam, sondern eigenständig, wobei die Erfassung nicht frontal, sondern stufenförmig ist. Der Leistungsaufwand wird verringert.

In einer weiteren Ausführungsform der Erfindung liegen die Zähne am Gitter vorzugsweise in einer Reihe mit den Zähnen am Dreschkorb.

Eine derartige Anordnung der Zähne am Gitter stabilisiert die gleichmäßige und kontinuierliche Fortbewegung des Gutes in der axialen Richtung beim Zusammenwirken mit den Rotorzähnen, wobei das Gut auf seinem gesamten Weg zum Austritt hin durchgekämmt wird. Es wird eine geringere Leistung für den Rotorantrieb aufgewendet und die Kornabscheidung am Gitter aktiviert.

In einer bevorzugten Ausführungsform der Erfindung befinden sich die Dreschkorbzähne am hinteren Dreschkorbteil in der axialen Verschiebungsrichtung des Gutes.

Diese Anordnungsvariante der Zähne am Dreschkorb erleichtert beim Einwirken der Rotorzähne auf das Gut den Einlauf desselben in die Dreschzone. Es wird ein optimales Volumen der zum Drusch kommenden Masse erreicht, der technologische Druschprozeß stabilisiert, der Abschälungs- und Brechungsgrad reduziert sowie die Abscheidung des Kornes unter den Dreschkorb verstärkt.

Kurze Beschreibung der Zeichnungen

Weitere Ziele und Vorteile der vorliegenden Erfindung sind aus einer nachstehenden eingehenden Beschreibung eines konkreten Ausführungsbeispiels derselben anhand beigefügter Zeichnungen besser verständlich, in denen es zeigt:

Fig. 1 eine Dresch- und Abscheidevorrichtung mit axialem Rotor für Getreidemähdrescher, im Querschnitt;

- 7 -

Fig. 2 eine Rotorausführung in axonometrischer Darstellung;

Fig. 3 eine Ausführungsform von Zähnen am Dreschkorb und Gitter in axonometrischer Darstellung.

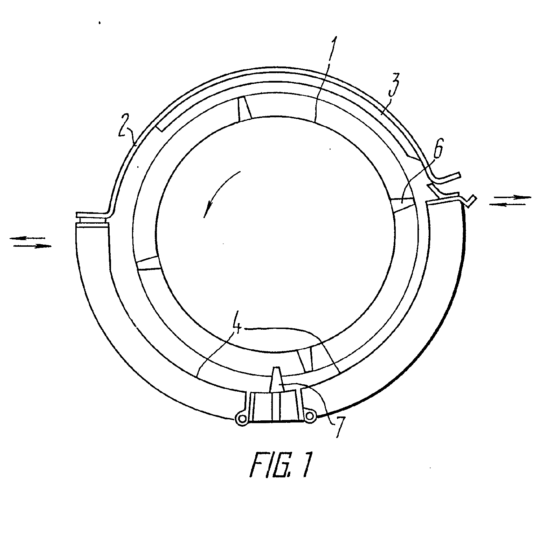

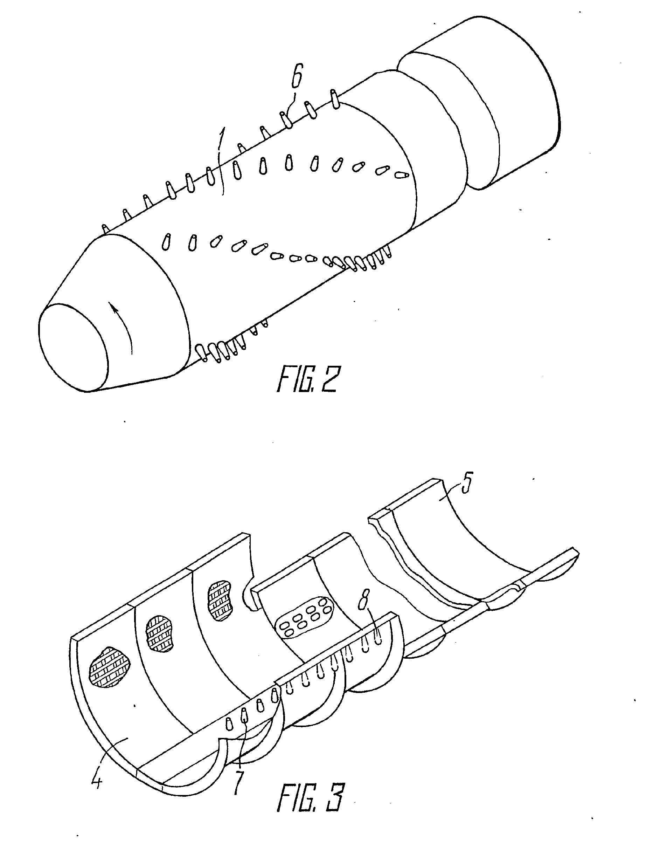

In Fig. 1, 2 ist eine Dresch- und Abscheidevorrichtung mit axialem Rotor für Getreidemähdrescher dargestellt, die einen Rotor 1 enthält, der in einem feststehenden zylindrischen Gehäuse 2 angeordnet ist, dessen oberer Teil mit spiralförmigen Leitrippen 3 an seiner Innenfläche, dessen unterer Teil aber in der Dreschzone mit einem Dreschkorb 4 und in der Abscheidezone mit einem Gitter 5 (Fig. 3) ausgestattet ist.

Der Rotor 1 (Fig. 1) ist in Gestalt eines hohlen Zylinders ausgebildet, auf dessen Umfang in der Dreschzone Zähne 6 (Fig. 2) angebracht sind, die in die Abscheidezone um einen bestimmten Längenbetrag eintreten können. In bezug auf die Umlaufrichtung des Rotors 1 und die Verschiebungsrichtung des Körnergutes zum Austrittsende hin sind Reihen von Zähnen 6 entlang einer Schraubenlinie ausgeführt, die mit der Richtung der Schraubenlinie der Leitrippen 3 (Fig. 1) nicht übereinstimmt.

Der Dreschkorb 4 mit einer gitterartig gestalteten Arbeitsfläche enthält auf seiner Oberfläche zumindest eine Reihe von Zähnen 7, die von der Vorderkante desselben in der axialen Verschiebungsrichtung des Gutes in der bevorzugten Ausführungsform in einem Abstand angebracht ist, der innerhalb der Länge eines Drittels der Steigung der Schraubenlinie der Leitrippen 3 liegt.

Das Gitter 5 (Fig. 3) mit der gitterartig gestalteten Arbeitsfläche enthält zumindest eine Reihe von Zähnen 8, die auf einer Länge angebracht sind, die der Anordnung der ähnlichen Zähne 6 am Rotor 1 in der Abscheidezone entspricht, und in einer Reihe mit den Zähnen 7 am Dreschkorb liegen.

Die Dresch- und Abscheidevorrichtung mit axialem Rotor für Getreidemähdrescher arbeitet folgenderweise.

Das in die Dreschvorrichtung kommende Druschgut wird während seiner Bewegung im Gehäuse 2 (Fig. 1) der Einwir-

- 5 -

kung der zusammenwirkenden Elemente von Rotor 1, Rippen 3, Dreschkorb 4 und Gitter 5 (Fig. 3) mehrfach unterworfen.

Die Arbeitselemente -- Zähne 6 (Fig. 2) -- des Rotors 1, erteilen, indem sie eine Portion der in den Ringspalt der Dreschzone zugeführten Stengelmasse erfassen, der letzteren eine schraubenförmige Bewegung in Richtung der Drehachse des Rotors 1, und das Fehlen der Zähne 7 an der Oberfläche des Dreschkorbes 4 (Fig. 3), d. h. an dessen Vorderteil, erleichtert den Einlauf des Gutes in die Dreschzone. Hierbei wird das Druschgut während seiner Wechselwirkung mit den Leitrippen 3 (Fig. 1) am Gehäuse 2 und den Leisten des gitterartigen Dreschkorbes 2 gewendet, aufgerieben, unter aktiver Aussonderung von Körnern aus demselben etwas aufgebauscht. Das in der axialen Richtung weiterbewegte und etwas aufgebauschte Gut tritt mit den Zähnen 7 am Dreschkorb 4 in Kontakt, wird ausgekämmt und dank der Wechselwirkung mit den Leisten des gitterartigen Dreschkorbes unter Kornaussonderung aufgerieben.

Dadurch, daß der Rotor 1 mit einer Vielzahl von zum Erfassen der Stengelmasse dienenden Zähnen 6 (Fig. 2) ausgestattet ist, von denen ein jeder eine relativ geringe Oberfläche zum Erfassen des Gutes besitzt und auf eine solche Weise angebracht ist, daß die Zähnereihen keinerlei Konfiguration bilden, die zum Ausbilden von Strohsträngen beitragen würde, zugleich aber ein bevorzugter effektiver Abstand zwischen den Zähnen beibehalten wird, kann der Druschprozeß, insbesondere beim Bearbeiten eines lang- und steifstengeligen Reisstrohes, stabilisiert werden.

Jeder Zahn erfaßt nur seinen eigenen Teil des Gutes, und zwar nicht gemeinsam mit den Nachbarzähnen, sondern eigenständig, wobei das Erfassen nicht frontal, sondern stufenförmig ist.

Die Verschiebung des Gutes in die Abscheidezone auf das Gitter 5 (Fig. 3) mit den Zähnen 6, die in der bevorzugten Ausführungsform in einer Reihe mit den Zähnen 7 am Dreschkorb 4 angebracht sind, stabilisiert eine gleichmäßige und kontinuierliche Fortbewegung des Gutes in der axialen Richtung. Beim Wechselwirken mit den Zähnen 6 am Rotor 1

- 9 -

wird das Gut auf seinem gesamten Weg zum Austritt hin durchgekammt, was die Kornabscheidung am Gitter intensiviert, die Strangbildung verhindert, einen geringeren Leistungsaufwand für den Rotorantrieb bedingt.

Ein zuverlassiger Ablauf des technologischen Prozesses dank der reduzierten Strangbildungsmöglichkeit gestattet es, die Körnerverluste hinter dem Mähdrescher zu verringern, den Energieaufwand herabzusetzen und die Arbeitsleistung des Axial-Mähdreschers beim Ausdrusch von angefeuchteten Kulturen, insbesondere von Reis, zu erhöhen.

Gewerbliche Verwertbarkeit

Die erfindungsgemäße Konstruktion der Dresch- und Abscheidevorrichtung mit axialem Rotor für Getreidemähdrescher gewährleistet ihr hohes Durchsatzvermögen, minimale Körnerverluste, das Abschälen und Brechen des Kornes während der Ernte, reduziert den Energieaufwand für die Durchführung des technologischen Prozesses und ermöglicht den Einsatz der erfindungsgemäßen Vorrichtung auf großen Reisanbauflächen.

- 10 -

PATENTANSPRÜCHE

1. Dresch- und Abscheidevorrichtung mit axialem Rotor für Getreidemähdrescher, die einen Rotor (1) mit Zähnen (6) in der Dresch- und Abscheidezonen enthält , welcher entlang der Fahrtrichtung des Mähdreschers in einem zylindrischen Gehäuse (2) mit Zähnen angeordnet ist, dessen oberer Teil mit spiralförmigen Leitrippen (3) an seiner Innenfläche, dessen unterer Teil aber in der Dreschzone mit einem Dreschkorb (4) und in der Abscheidezone mit einem Abscheidegitter (5) ausgestattet ist, dadurch g e - k e n n z e i c h n e t , daß die Zähne (6) am Rotor (1) entlang Schraubenlinien angebracht sind, deren Richtung mit der Richtung der spiralförmigen Leitrippen (3) am Gehäuse (2) nicht übereinstimmt, während am Abscheidegitter (5) Zähne (6) auf einer Länge angebracht sind, die der Anordnung der Zähne (6) am Rotor (1) entspricht.

2. Dresch- und Abscheidevorrichtung mit axialem Rotor nach Anspruch 1, dadurch g e k e n n z e i c h n e t , daß die Zähne (7) am Dreschkorb (4) an dessen hinterem Teil in der axialen Verschiebungsrichtung des Gutes angebracht sind.

3. Dresch- und Abscheidevorrichtung mit axialem Rotor nach Ansprüchen 1 und 2, dadurch g e k e n n - z e i c h n e t , daß die Zähne (6) am Abscheidegitter (5) in einer Reihe mit den Zähnen (7) am Dreschkorb (4) angebracht sind.

FIG. 1

EP 0 382 843 A1

FIG. 2

FIG. 3

# INTERNATIONAL SEARCH REPORT

International Application No PCT/SU 88/00028

**I. CLASSIFICATION OF SUBJECT MATTER** (if several classification symbols apply, indicate all)

According to International Patent Classification (IPC) or to both National Classification and IPC

IPC⁴ A 01 F 7/06, 12/26

**II. FIELDS SEARCHED**

| Minimum Documentation Searched [7] | |
|---|---|
| Classification System | Classification Symbols |
| IPC⁴ | A 01 F 7/06,11/00,12/20,12/24,12/26 |

| Documentation Searched other than Minimum Documentation to the Extent that such Documents are Included in the Fields Searched [8] |
|---|
| |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | US, A, 3618616 (International Harvester Co.) 9 November 1971 (09.11.71) see columns 2,3, figures 1-4 | 1-3 |
| Y | SU, A1, 33352, (E.N KRENNIKOV), 30 November 1933 (30.11.33) see columns 1,2 figure 2 | 1 |
| A | SU, A1, 1268130, (Golovnoe spetsializirovannoe konstruktorskoe bjuro po mashinam dlya uborki zernovykh kultur i samokhodnym shassi) 7 November 1986 (07.11.86) | 1 |
| A | US, A, 2129894 (Clarence M. Weinhold), 13 September 1938 (13.09.38) | 1 |
| A | US, A, 2213906, (Aaron Ebersol, Milverton) 3 September 1940 (03.09.40) | 1 |

--------

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 19 July 1988 (19.07.88) | 5 October 1988 (05.10.88) |

| International Searching Authority | Signature of Authorized Officer |
|---|---|
| ISA/SU | |

Form PCT/ISA/210 (second sheet) (January 1985)